# EUROPEAN PATENT APPLICATION

(11) **EP 1 162 131 A1**
(43) Date of publication of application: **12.12.2001**
(21) Application number: 00202023.8
(22) Date of filing: 07.06.2000
(51) Int. Cl.: B62H 3/12, E04H 6/00

(54) **Device for storing bicycles**

(71) Applicant: Fa. Sy- Minc, 2165 BD Lisserbroek (NL)
(72) Inventor: Prins, Antoon Adrianus, 1018 MV Amsterdam (NL); Minck, Lodewijk Petrus Maria, 2181 VG Hillegom (NL)
(74) Representative: Lips, Hendrik Jan George, Ir.

(57) **Abstract**

Device for storing bicycles, comprising an endless conveyor chain (5), provided with members (6) being suitable for receiving a suspension hook (15) across its length. Horizontal guiding means (7) support the conveyor chain at such a distance above the ground, that every suspension hook (15) can take up the front wheel (15) of a bicycle (4), and that the bicycle is free from the ground. The guiding means (7) comprise two parallel paths (8) at both ends merging into one another by semi-circular bends (9). A robot (11) comprising a carriage (13) being movable in vertical direction and being provided with means for receiving a suspension hook (15), which can be taken over by a member of the conveyor chain (5) and vice versa, is present at the position (10) where a bicycle (4) can be brought in and out of the device (3).

## Description

The invention relates to a device for storing bicycles.

Such devices are e.g. in the form of racks in which the front wheels of a number of bicycles can be received. In order to be able to locate the bicycles as close to one another as possible, so that they take up little space, the racks have alternately a high and a low support. However, due to the fact that the frame heights and the shape of the handlebars can vary greatly, it is not always easy to put a bicycle between two bicycles positioned low or high. This often results in damage to gear cables or braking cables. Further, bicycles have tyres of varying thicknesses, which does not always lead to an optimum support of the bicycles, or as a result of which it may even be impossible to put the bicycle into a rack.

In bicycle-lock-ups in particular it is desirable to use the available space as economically as possible. However, space is required at every bicycle in order to be able to put it into the rack and to remove it from the rack.

The object of the invention is to remove these difficulties and to that end it provides for, that the device comprises an endless conveyor chain, provided with spaced apart members being suitable for receiving a suspension hook across its length, that guiding means essentially arranged in a horizontal plane support said conveyor chain at such a distance above the ground, that every suspension hook takes up the front wheel of a bicycle, so that the bicycle is free from the ground, said guiding means comprising two paths almost in parallel and at both ends merging into one another by substantially semi-circular bends, and that means for driving the conveyor chain are provided.

Now, only one single location, or some locations require space to mount a bicycle into the device or removing it from the device. Since the straight parts of the guiding means can have a considerable length, it is possible to store a large number of bicycles on a much smaller surface.

There, it will be provided for, that the suspension hooks take up a fixed position in relation to the conveyor chain. Owing to this, the bicycles hanging in the device will not be able to rotate in relation to one another.

It is also possible, that adjacent suspension hooks are situated at different heights in relation to one another. As a consequence, the bicycles can be located closer to one another as it is substantially the case with the conventional bicycle racks. However, bicycles of varying tyre thickness need not be taken into account now. The hooks can have such dimensions, that they will be able to receive any wheel rim.

In particular, the position where a bicycle can be brought into the device or be removed from it can be situated at a bend of the guiding means.

At a bend, the planes in which the bicycles are located will no longer be in parallel, but enclose an angle with each other. Due to this, the handlebars of the adjacent bicycles in particular will be spaced apart further. This facilitates bringing the bicycles into and out of the device.

Now, mounting the front wheel of a bicycle into a suspension hook located at a relatively high position will cause many persons some difficulties. This may also cause damage to the bicycle and to the rim of the front wheel in particular.

In connection with that, a robot comprising means for lifting a suspension hook, said means being movable substantially in vertical direction and being able to cooperate with the member - connected to the conveyor chain - for transferring the suspension hook from the robot on to the member connected to said chain and vice versa, will be provided at the position where a bicycle can be brought into and out of the device.

To that end, the suspension hook can be provided with a pin mounted at right angles to the plane of the suspension hook, said pin being supportable both by a part of the robot and the member connected to the conveyor chain. The member connected to the conveyor chain can be provided with a pivotably supported take-over hook, which can be pivoted under the pin of the suspension hook and thus be able to take the suspension hook from the robot and vice versa.

In order to prevent an unauthorized person from trying to remove a bicycle from a suspension hook coupled to the chain, protection means can be mounted, providing for that the bicycle can not be lifted from the suspension hook.

Said protection means can be formed in that the suspension hook is provided with an arm being square to its plane, in which said arm, when the suspension hook is coupled to the member connected to the conveyor chain, contacts a part fixedly connected to said member, whereas the part extending almost horizontally and connecting the upwardly bent end leg of said suspension hook is received in a slot extending upwards in a plate facing downwards and connected to said member, in which plate then contacts the inner side of said end leg and the front wheel of the bicycle can be received between said plate and the leg of the suspension hook, said leg being coupled to said member.

As a consequence of this, the suspension hook can not be moved upwards or laterally, and the rim of the wheel of a bicycle is in a closed space so that the wheel can not be lifted out of the suspension hook.

Possibly, the robot can be provided with a guide for the rear wheel and/or the front wheel of the bicycle which is brought into or out of the device. Due to that, undesired movements of the bicycle can be prevented. Namely, the rear wheel of a bicycle supported by a suspension hook will not be located vertically below the point of suspension at the front wheel of the bicycle.

After a person has brought the front wheel of a bicycle into the suspension hook, that person can activate the robot and guide the bicycle until it has taken up the approximately vertical position. Then, the suspension hook is moved further by the robot and is automatically taken up by the member of the conveyor chain, and is thus coupled with said conveyor chain. When a bicycle should be removed from the device, it is brought to the robot by moving the conveyor chain. The suspension hook is then taken up by the robot, by means of which it can be brought into the normal position again. Generally, a person will slightly guide the bicycle during movement of the bicycle from the vertical to the horizontal position.

In that case, the robot will be provided with a feeler at a certain distance above the ground, said feeler actuating a switch for interrupting downward movement of the suspension hook. The rear wheel of the bicycle will contact the feeler when the rear wheel is close to the ground. The person wishing to remove the bicycle can now pull away the rear wheel so that the suspension hook can continue its downward movement and both the rear wheel and the front wheel come to bear on the ground. After that, he can release the front wheel from the suspension hook.

In case of a guarded bicycle lock-up, the guard can check whether an unauthorized person has removed the bicycle from the device. In case of an unguarded bicycle lock-up, it can be provided for, that when storing a bicycle a user is assigned a certain code or can choose one, relating to the location where his bicycle is stored in the device. Afterwards, by using said code he can provide for that his bicycle is brought to the robot by movement of the chain and can be removed from the device. It is also possible that on paying the storage charges, such as by means of a chip card, a card bearing a code can be issued. However, all of said possibilities are obvious for a person skilled in the art and need no further explanation.

If it is desired to arrange a device in a basement, it can be provided for, that near the location where a bicycle should be brought into the device or be removed from it, a hatch that can be swung aside is mounted in the ceiling of the basement and that the robot is designed such, that a bicycle can be brought into a vertical position by an upward movement and, after swinging aside the hatch, can be brought down for transferring the suspension hook to a member connected to the chain and vice versa.

Thus, it is not necessary that a bicycle to be stored in the basement is brought into the basement.

The robot can then possibly be designed such, that it can transfer a bicycle to both a device arranged in the basement and to a device arranged on the ground floor.

The invention is further explained by way of embodiments, shown in the drawing, in which:
Fig. 1 shows schematically a plan view of a bicycle lock-up in which a number of devices according to the invention have been arranged;
Fig. 2 shows schematically a plan view, on an enlarged scale, of a part of Fig. 1, with a number of bicycles mounted in it;
Fig. 3 shows schematically a view of a number of bicycles suspended from the device;
Fig. 4 shows schematically a side view of a robot for use with the device, with a bicycle positioned at it;
Fig. 5 shows schematically a side view corresponding to Fig. 4 with the bicycle in the vertical position;
Fig. 6 shows schematically a view of a suspension hook with a part of the member connected to said chain, in which member said suspension hook is received;
Fig. 7 shows schematically a side view of the suspension hook of Fig. 6 with further parts of the member connected to the chain;
Figs. 8A - 8D show schematically the various stages of in storing a bicycle in a basement; and
Fig. 9 shows schematically a part of a robot and of a member connected to the conveyor chain on taking over a suspension hook.

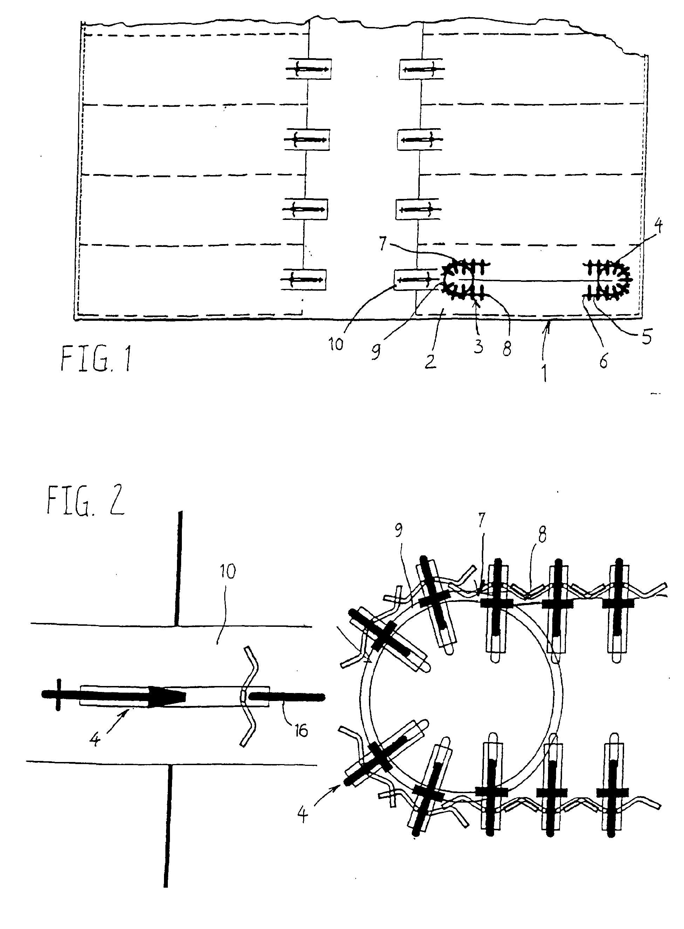

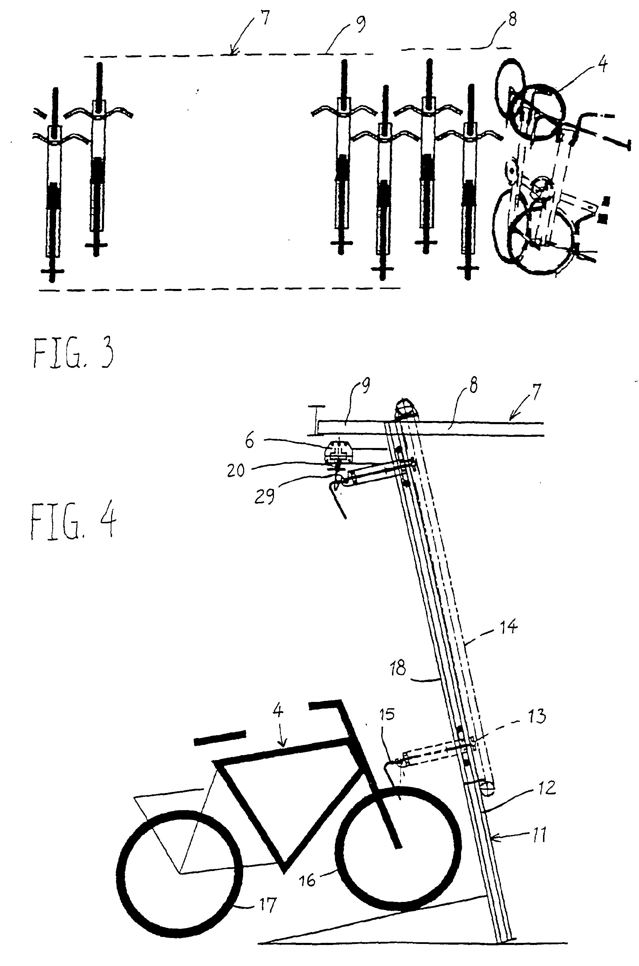

Fig. 1 shows a plan of a bicycle lock-up 1 comprising a number of compartments 2, with a device 3 according to the invention being accommodated in each of them, suitable for storing a number of bicycles 4, such as appears from Figures 2 and 3 in particular.

To that end, each device 3 comprises a conveyor chain 5 being provided with members 6 to be described later. The conveyor chain 5 is supported by guiding means 7 consisting of two straight, parallel paths 8 and two bends 9.

On the location 10, approximately in the middle of a bend 9, a bicycle 4 can be brought into the device 3 or be removed from it, as it is shown in more detail in Fig. 2.

Fig. 3 illustrates a side view of a number of bicycles 4 suspended from the members 6, which shows that they can be situated at various heights. The bicycles will take up a somewhat oblique position, as appears from the right-hand part of Fig. 3. This position will depend on the size of the bicycle, thus the position of its centre of gravity.

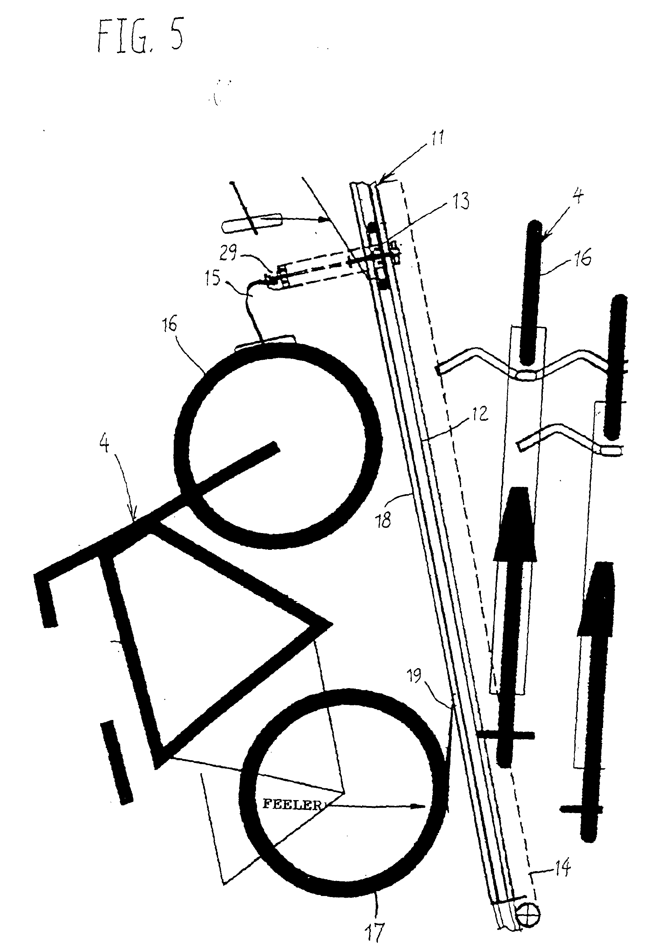

Figs. 4 and 5 illustrate schematically the robot 11 for bringing a bicycle 4 to the member 6 connected to the conveyor chain 5. The robot 11 comprises a beam 12 along which a carriage 13 is moveable, as by means of a motor-driven chain 14, for example. A suspension hook 15 can be accommodated in the carriage 13. In Fig. 4, dash lines indicate the carriage 13 in its lowermost position, in which the suspension hook 15 encloses the rim of the front wheel 16 of the bicycle 4.

When a bicycle 4 should be accommodated in the device 3, the carriage 13 will be moved upwards with the help of the drive chain 14. Having arrived at a member 6 connected to the conveyor chain 5, said member will take over the suspension hook 15 in way to be described further.

For guiding the rear wheel 17 and possibly the front wheel 16 of a bicycle 4 on upward or downward movement thereof, part of the beam 12 can be designed as a guide 18.

As appears from Figure 5 in particular, a feeler 19 can be mounted near the lower end of the guide 18. When a bicycle 4 moves downwards, its rear wheel 17 will contact the feeler 19. The feeler 19 will actuate a switch not further indicated as a result of which the downward movement of the carriage 13 will be interrupted. The person wishing to remove the bicycle from the device can now pull the rear wheel 17 away from the feeler 19 in order to bring the bicycle to its more horizontal position. Then, the feeler 19 will be released and the carriage 13 will continue its downward movement.

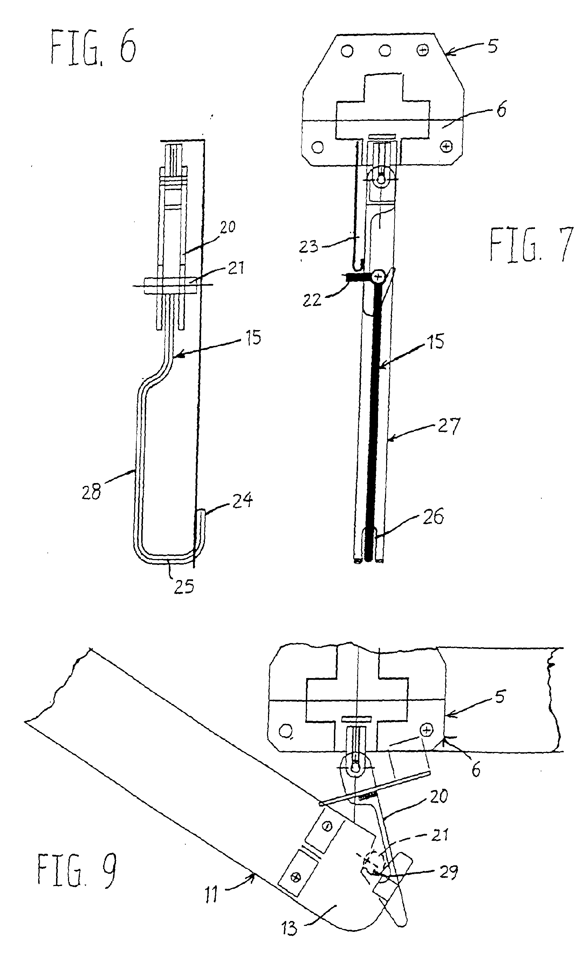

Figures 6 and 7 show a portion of the conveyor chain 5 and of a member 6 connected to it, which serves for taking over a suspension hook 15 which has been brought to said member 6 by means of the robot 11. To that end, the member 6 is provided with a take-over hook 20 pivotably connected to it, see also Figure 4. The take-over hook 20 can be pivoted for receiving a pin 21 being connected to the suspension hook 15. The suspension hook can then be lifted from the carriage 13 in that the pin 21 bears in a slot 29 facing upwards, see also Figures 4 and 5, in the carriage 13.

In order to prevent an unauthorized person from removing a bicycle from a suspension hook 15 coupled to the conveyor chain 5, said suspension hook is provided with an arm 22 being square to its plane. See Figure 7. When the suspension hook is coupled to said member 6, the arm 22 contacts a part 23 fixedly connected to the member 6. The end leg 24 bent upwards, see Figure 6, of said suspension hook 15 is followed by an almost horizontally extending part 25 which is then received in slot 26 facing upwards in a plate 27 facing downwards and being connected to said member 6. The plate 27 then substantially contacts the inner side of said end leg 24. The rim of the front wheel of a bicycle can therefore be accommodated in the space formed between the plate 27 and the leg 28 of said suspension hook 15 which is coupled to said member. Owing to this, the suspension hook can not be moved upwards or laterally, and the wheel can not be lifted from the suspension hook 15.

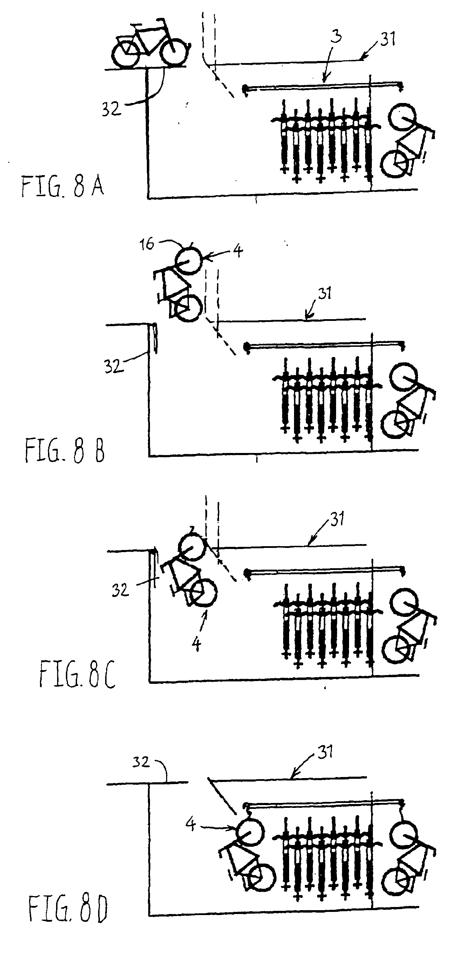

Fig. 8 shows the provision of a device 3 in a basement 30. The ceiling 31 of the basement is provided with a hatch 32 that can be swung aside. In the normal position of the hatch 32, a bicycle 4 can be brought onto it, as illustrated in Fig. 8A. In the way described above, the rim of the front wheel 16 can be brought into a suspension hook 15 being coupled to the robot 11 not further indicated here. Subsequently, the bicycle is brought down with the help of the robot 11, as illustrated in Fig. 8C. As shown in Fig. 8D, the hatch 32 can now be closed and the suspension hook 15 will be taken over by a take-over hook 20 pivotably connected to the member 6 of the conveyor chain 5. This is shown on an enlarged scale in Fig. 9. On removing a bicycle 4 from the device, one will obviously act in the opposite way.

It will be obvious, that only some possible embodiments of a device according to the invention have been illustrated in the drawing and described above and that many changes can be made without departing from the inventive idea, as it is indicated in the appended claims.

## Claims

1. Device for storing bicycles, **characterized in that** the device comprises an endless conveyor chain (5), provided with spaced apart members (6) being suitable for receiving a suspension hook (15) across its length, that guiding means (7) essentially arranged in a horizontal plane support said conveyor chain at such a distance above the ground, that every suspension hook (15) takes up the front wheel of a bicycle (4), so that the bicycle is free from the ground, said guiding means (7) comprising two paths (8) almost in parallel and at both ends merging into one another by substantially semi-circular bends (9), and that means for driving the conveyor chain (5) are provided.

2. Device according to claim 1, **characterized in that** the suspension hooks (15) take up a fixed position in relation to the conveyor chain (5).

3. Device according to claim 1 or 2, **characterized in that** adjacent suspension hooks (15) are situated at different heights in relation to one another.

4. Device according to one of the preceding claims, **characterized in that** the position (10) where a bicycle (4) can be brought into the device (4) or be removed from it can be situated at a bend (9) of the guiding means (7).

5. Device according to one of the preceding claims, **characterized in that** a robot (11) comprising means (20) for lifting a suspension hook (15), said means being movable substantially in vertical direction and being able to cooperate with the member (6) being connected to the conveyor chain (5) for transferring the suspension hook (15) from the robot (11) onto the member (6) connected to said chain (5) and vice versa, will be provided at the position (10) where a bicycle (4) can be brought into and out of the device (3).

6. Device according to claim 5, **characterized in that** the suspension hook (15) is provided with a pin (21) mounted square to the plane of the suspension hook, said pin being supportable both by a part (13) of the robot (11) and the member connected to the conveyor chain (5).

7. Device according to claim 6, **characterized in that** the member (6) connected to the conveyor chain (5) is provided with a pivotably supported take-over hook (20), which can be pivoted under the pin (21) of the suspension hook (15) and thus be able to take over the suspension hook (15) from the robot (11) and vice versa.

8. Device according to claim 7, **characterized in that** protection means are provided, so that a bicycle (4) brought into the device can not be lifted from the suspension hook (15) in another position than intended.

9. Device according to claim 8, **characterized in that** said protection means are formed **in that** the suspension hook (15) is provided with an arm (22) being square to its plane, in which said arm, when the suspension hook (15) is coupled to the member (6) connected to the conveyor chain (5), contacts a part (23) fixedly connected to said member, whereas the part (25) extending almost horizontally and following the upwardly bent end leg (24) of said suspension hook (15), is received in a slot (26) extending upwards in a plate (27) facing downwards and connected to said member (6), in which plate then substantially contacts the inner side of said end leg (24) and the front wheel (16) of the bicycle (4) can be received between said plate (27) and the leg (28) of the suspension hook (15), said leg being coupled to said member (6).

10. Device according to one of the claims 5 - 9, **characterized in that** the robot (11) is provided with a guide (18) for the rear wheel (17) and/or the front wheel (16) of the bicycle (4) which is brought into or out of the device (3).

11. Device according claim 10, **characterized in that** the robot (11) is provided with a feeler (19) at a certain distance above the ground, said feeler actuating a switch for interrupting downward movement of the suspension hook (15).

12. Device according to one of the preceding claims, **characterized in that** on arranging a device (3) in a basement, near the location (10) where a bicycle (4) should be brought into the device or be removed from it, a hatch (32) that can be swung aside is mounted in the ceiling (31) of the basement and that the robot (11) is designed such, that a bicycle (4) can be brought into a vertical position by an upward movement and, after swinging aside the hatch (32), can be brought down for transferring the suspension hook (15) to a member (6) connected to the chain (5) and vice versa.
